# EUROPEAN PATENT APPLICATION

(11) **EP 4 693 142 A1**
(43) Date of publication of application: **11.02.2026**
(21) Application number: 25163987.8
(22) Date of filing: 14.03.2025
(51) Int. Cl.: G06Q 20/32, G06Q 20/34

(54) **NFC-BASED PAGE OPENING AND INFORMATION SENDING METHODS, APPARATUSES, AND DEVICES**

(30) Priority: 08.08.2024 CN 202411092836
(71) Applicant: Advanced Nova Technologies (Singapore) Holding Pte. Ltd., Singapore 189773 (SG)
(72) Inventor: CHENG, Ting, 189773 Singapore (SG)
(74) Representative: Fish & Richardson P.C.

(57) **Abstract**

One or more embodiments of this specification disclose NFC-based payment page opening methods, apparatuses, and devices, NFC-based information sending methods, apparatuses, and devices, and URL sending methods, apparatuses, and devices. This solution can include: After acquiring, from an NFC tag device based on a near field communication way, a first URL that includes a URL query identifier, a payment terminal device can determine, based on data already stored by the payment terminal device, a second URL that corresponds to the URL query identifier and that includes target information used to display a payment page; and can further display the payment page based on the second URL. A length of the first URL is less than or equal to a maximum number of bytes that can be transmitted by the NFC tag device based on the near field communication way at a time.

## Description

### TECHNICAL FIELD

This specification relates to the field of near field payment technologies, and in particular, to NFC-based payment page opening methods, apparatuses, and devices, NFC-based information sending methods, apparatuses, and devices, and URL sending methods, apparatuses, and devices.

### BACKGROUND

Near field communication (NFC) payment means that when purchasing goods or services, consumers complete payment through communication implemented by NFC tag devices such as POS cash registers or vending machines through NFC radio frequency channels by using user terminals that support NFC functions. The NFC payment is an emerging mobile payment way. The consumers make payment only by putting mobile phones of the consumers close to NFC tag devices provided by merchants, without scanning code. This is more convenient. At present, in an NFC payment process, an App calling process in which a user terminal is put close to an NFC tag device and then the user terminal displays a payment page consumes long time, resulting in poor use experience of a user.

Based on this, how to reduce time consumed during opening of the payment page in the NFC payment process and improve an App calling speed has become a technical problem that needs to be urgently alleviated.

### SUMMARY

One or more embodiments of this specification provide NFC-based payment page opening methods, apparatuses, and devices, NFC-based information sending methods, apparatuses, and devices, and URL sending methods, apparatuses, and devices, to effectively reduce time consumed during opening of the payment page in an NFC payment process and improve an App calling speed.

To alleviate the above-mentioned technical problem, one or more embodiments of this specification provide an NFC-based payment page opening method, applied to a payment terminal device and including: acquiring a first URL from an NFC tag device based on a near field communication way, where a length of the first URL is less than or equal to a maximum number of bytes that can be transmitted by the NFC tag device based on the near field communication way at a time, and the first URL includes a URL query identifier; determining, based on data already stored by the payment terminal device, a second URL corresponding to the URL query identifier, where the second URL includes target information used to display a payment page; and displaying the payment page based on the second URL.

One or more embodiments of this specification further provide an NFC-based information sending method, applied to an NFC tag device and including: receiving a near field communication signal transmitted by a payment terminal device; and sending a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

One or more embodiments of this specification further provide a URL-sending method, applied to an application server and including: acquiring a URL acquisition request sent by an NFC tag device; generating a first URL in response to the URL acquisition request, where a length of the first URL is less than or equal to a predetermined byte count threshold, and the byte count threshold is a maximum number of bytes that can be transmitted based on NFC at a time; and sending the first URL to the NFC tag device, where the first URL is used to be acquired by a payment terminal device from the NFC tag device in a near field communication way, the first URL includes a URL query identifier, the URL query identifier is used by the payment terminal device to query a second URL, and the second URL includes target information used by the payment terminal device to display a payment page.

One or more embodiments of this specification further provide an NFC-based payment page opening apparatus, used in a payment terminal device and including: a URL acquisition module, configured to acquire a first URL from an NFC tag device based on a near field communication way, where a length of the first URL is less than or equal to a maximum number of bytes that can be transmitted by the NFC tag device based on the near field communication way at a time, and the first URL includes a URL query identifier; a URL conversion module, configured to determine, based on data already stored by the payment terminal device, a second URL corresponding to the URL query identifier, where the second URL includes target information used to display a payment page; and a display module, configured to display the payment page based on the second URL.

One or more embodiments of this specification further provide an NFC-based information sending apparatus, used in an NFC tag device and including: a signal receiving module, configured to receive a near field communication signal transmitted by a payment terminal device; and a signal sending module, configured to send a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

One or more embodiments of this specification further provide a URL-sending apparatus, used in an application server and including: a request acquisition module, configured to acquire a URL acquisition request sent by an NFC tag device; a URL generation module, configured to generate a first URL in response to the URL acquisition request, where a length of the first URL is less than or equal to a predetermined byte count threshold, and the byte count threshold is a maximum number of bytes that can be transmitted based on NFC at a time; and a URL sending module, configured to send the first URL to the NFC tag device, where the first URL is used to be acquired by a payment terminal device the NFC tag device in a near field communication way, the first URL includes a URL query identifier, the URL query identifier is used by the payment terminal device query a second URL, and the second URL includes target information used by the payment terminal device to display a payment page.

One or more embodiments of this specification further provide a payment terminal device, including: at least one processor; and a memory communicatively connected to the at least one processor, where the memory stores instructions that can be executed by the at least one processor, and the instructions are executed by the at least one processor so that the at least one processor can: acquire a first URL from an NFC tag device based on a near field communication way, where a length of the first URL is less than or equal to a maximum number of bytes that can be transmitted by the NFC tag device based on the near field communication way at a time, and the first URL includes a URL query identifier; determine, based on data already stored by the payment terminal device, a second URL corresponding to the URL query identifier, where the second URL includes target information used to display a payment page; and display the payment page based on the second URL.

One or more embodiments of this specification further provide an NFC tag device, including: at least one processor; and a memory communicatively connected to the at least one processor, where the memory stores instructions that can be executed by the at least one processor, and the instructions are executed by the at least one processor so that the at least one processor can: receive a near field communication signal transmitted by a payment terminal device; and send a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

One or more embodiments of this specification further provide an application server, including: at least one processor; and a memory communicatively connected to the at least one processor, where the memory stores instructions that can be executed by the at least one processor, and the instructions are executed by the at least one processor so that the at least one processor can: acquire a URL acquisition request sent by an NFC tag device; generate a first URL in response to the URL acquisition request, where a length of the first URL is less than or equal to a predetermined byte count threshold, and the byte count threshold is a maximum number of bytes that can be transmitted based on NFC at a time; and send the first URL to the NFC tag device, where the first URL is used to be acquired by a payment terminal device from the NFC tag device in a near field communication way, the first URL includes a URL query identifier, the URL query identifier is used by the payment terminal device to query a second URL, and the second URL includes target information used by the payment terminal device to display a payment page.

At least one embodiment provided in this specification can achieve the following beneficial effects:

In one or more embodiments of this specification, since the length of the first URL acquired by the payment terminal device from the NFC tag device based on the near field communication way is not greater than the maximum number of bytes that can be transmitted by the NFC tag device based on the near field communication way at a time, a case that is caused by a URL being excessively long and in which the NFC tag device needs to perform a plurality of sub-packet transmissions with the payment terminal device is avoided, thereby improving transmission efficiency of information transmission between the NFC tag device and the payment terminal device and effectively reducing information transmission time. In addition, the first URL transmitted by the NFC tag device to the payment terminal device in the near field communication way includes the URL query identifier, and the payment terminal device can determine, based on the URL query identifier and the already stored data, the second URL that needs to be used for displaying the payment page, to obtain, through local query, the second URL corresponding to the first URL, and further open the payment page based on the second URL, where network access does not need to be performed in a process of opening the payment page, so that time consumed during opening of the payment page in the NFC payment process is further reduced, thereby effectively improving an App calling speed, and further helping improve user experience and NFC payment efficiency.

### BRIEF DESCRIPTION OF DRAWINGS

To describe the technical solutions in one or more embodiments of this specification or in an existing technology more clearly, the following briefly describes the accompanying drawings needed for describing the embodiments or the existing technology. Clearly, the accompanying drawings in the following descriptions merely show some embodiments of this application, and a person of ordinary skill in the art can still derive other drawings from these accompanying drawings without creative efforts.
FIG. 1 is a schematic diagram illustrating an application scenario of an NFC-based payment page opening method, according to one or more embodiments of this specification;
FIG. 2 is a schematic flowchart illustrating an NFC-based payment page opening method, according to one or more embodiments of this specification;
FIG. 3a is a schematic diagram illustrating a payment page, according to one or more embodiments of this specification;
FIG. 3b is a schematic diagram illustrating another payment page, according to one or more embodiments of this specification;
FIG. 4 is a schematic flowchart illustrating an NFC-based information sending method, according to one or more embodiments of this specification;
FIG. 5 is a schematic flowchart illustrating a URL sending method, according to one or more embodiments of this specification;
FIG. 6 is a swimlane diagram illustrating the NFC-based payment page opening method corresponding to FIG. 2, according to one or more embodiments of this specification;
FIG. 7 is a schematic diagram illustrating a structure of an NFC-based payment page opening apparatus corresponding to FIG. 2, according to one or more embodiments of this specification;
FIG. 8 is a schematic diagram illustrating a structure of an NFC-based information sending apparatus corresponding to FIG. 4, according to one or more embodiments of this specification;
FIG. 9 is a schematic diagram illustrating a structure of a URL sending apparatus corresponding to FIG. 5, according to one or more embodiments of this specification;
FIG. 10 is a schematic diagram illustrating a structure of a payment terminal device corresponding to FIG. 2, according to one or more embodiments of this specification;
FIG. 11 is a schematic diagram illustrating a structure of an NFC tag device corresponding to FIG. 4, according to one or more embodiments of this specification; and
FIG. 12 is a schematic diagram illustrating a structure of an application server corresponding to FIG. 5, according to one or more embodiments of this specification.

### DESCRIPTION OF EMBODIMENTS

To make the objectives, technical solutions, and advantages of one or more embodiments of this specification clearer, the following clearly and fully describes the technical solutions in one or more embodiments of this specification with reference to some specific embodiments of this specification and the corresponding accompanying drawings. Clearly, the described embodiments are merely some but not all of embodiments of this specification. All other embodiments obtained by a person of ordinary skill in the art based on embodiments of this specification without creative efforts shall fall within the protection scope of one or more embodiments of this specification.

It should be understood that although terms "first", "second", etc. can be used in one or more embodiments of this application to describe various types of information, the information is not limited to these terms. These terms are merely used to distinguish between information of the same type. For example, the first can also be referred to as the second without departing from the scope of one or more embodiments of this application, and similarly, the second can be referred to as the first. Depending on the context, the word "if" used here can be interpreted as "when" or "while" or "in response to determining".

It is worthwhile to note that the user information (including but not limited to user equipment information, user personal information, etc.) and the data (including but not limited to data used for analysis, stored data, displayed data, etc.) used in this application are information and data that are authorized by users or that are fully authorized by all parties, and the related data need to be collected, used, and processed in compliance with relevant laws, regulations, and standards of relevant regions, and corresponding operation entries are provided for users to choose to authorize or reject.

In an existing technology, an App calling process based on NFC payment consumes long time, and a user needs to wait for long time before seeing a payment page, resulting in poor user experience. There are the following two main causes that cause such a case: (1) In an NFC communication process, a length of a uniform resource locator (URL) transmitted by an NFC tag device to a payment terminal device is long. Since a maximum number of bytes to be transmitted at a time is specified in an NFC communication standard, a plurality of sub-packet transmissions need to be performed when a number of bytes of a URL to be transmitted exceeds a maximum number of bytes that can be transmitted at a time by an NFC tag device based on a near field communication way. Consequently, a process of sending the URL by the NFC tag device to the payment terminal device occupies long time. (2) After obtaining the URL, the payment terminal device needs to request, in a network requesting way, a service end of a code platform to perform decoding before entering the payment page, where a plurality of times of network requesting needs to be performed in an App calling process, and a process of performing the plurality of times of network requesting increases App calling time.

To alleviate deficiencies in the existing technology, this solution provides the following embodiments.

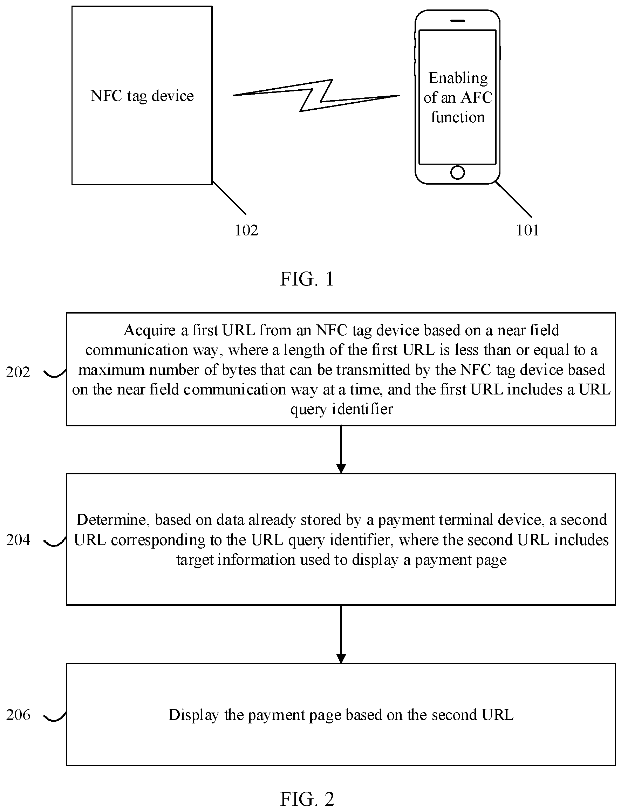

FIG. 1 is a schematic diagram illustrating an application scenario of an NFC-based payment page opening method, according to one or more embodiments of this specification.

As shown in FIG. 1, when a user needs to pay for an order by using a payment terminal device 101 carried by the user, the user can put, after turning on an NFC function of the payment terminal device 101, the payment terminal device 101 to an NFC tag device 102 set by a merchant. After sensing an NFC radio frequency field of the payment terminal device 101, the NFC tag device 102 can send, to the payment terminal device 101 based on a near field communication way at a time, a first URL (where a length of the first URL is less than or equal to a maximum number of bytes that can be transmitted by the NFC tag device 102 based on the near field communication way at a time) including a URL query identifier. After receiving the first URL sent by the NFC tag device 102 based on the near field communication way, the payment terminal device 101 can determine a second URL corresponding to the URL query identifier based on data already stored by the payment terminal device 101, and further render, based on the second URL, a payment page displayed to the user.

In the method in FIG. 1, since the length of the first URL acquired by the payment terminal device from the NFC tag device based on the near field communication way is not greater than the maximum number of bytes that can be transmitted by the NFC tag device based on the near field communication way at a time, a case that is caused by a URL being excessively long and in which the NFC tag device needs to perform a plurality of sub-packet transmissions with the payment terminal device is avoided, thereby improving transmission efficiency of information transmission between the NFC tag device and the payment terminal device and effectively reducing information transmission time. In addition, the first URL transmitted by the NFC tag device to the payment terminal device in the near field communication way includes the URL query identifier, and the payment terminal device can determine, based on the URL query identifier and the already stored data, the second URL that needs to be used for displaying the payment page, to obtain, through local query, the second URL corresponding to the first URL, so that time consumed during opening of the payment page in the NFC payment process is further reduced, thereby effectively improving an App calling speed, and further helping improve user experience and NFC payment efficiency.

FIG. 2 is a schematic flowchart illustrating an NFC-based payment page opening method, according to one or more embodiments of this specification. From a hardware perspective, the process can be performed by a payment terminal device. From a program perspective, the process can be performed by an application program installed in the payment terminal device. As shown in FIG. 2, the process can include the following steps.

Step 202: Acquire a first URL from an NFC tag device based on a near field communication way, where a length of the first URL is less than or equal to a maximum number of bytes that can be transmitted by the NFC tag device based on the near field communication way at a time, and the first URL includes a URL query identifier.

In one or more embodiments of this specification, the NFC tag device can be a payment collection device set by a merchant in an offline payment scenario. The payment terminal device can be a smartphone that supports an NFC function and that is carried by a user or can be another device that supports the NFC function and that can complete NFC payment. This is not specifically limited.

In practice, the maximum number of bytes that can be transmitted by the NFC tag device based on the near field communication way at a time is usually 124 bytes, and therefore the length of the first URL transmitted by the NFC tag device to the payment terminal device of the user based on the near field communication way can be less than 124 bytes or equal to 124 bytes.

In one or more embodiments of this specification, since the length of the first URL acquired by the payment terminal device from the NFC tag device based on the near field communication way is not greater than the maximum number of bytes that can be transmitted by the NFC tag device based on the near field communication way at a time, a case that is caused by a URL being excessively long and in which the NFC tag device needs to perform a plurality of sub-packet transmissions with the payment terminal device is avoided, thereby improving transmission efficiency of information transmission between the NFC tag device and the payment terminal device and effectively reducing information transmission time.

Step 204: Determine, based on data already stored by the payment terminal device, a second URL corresponding to the URL query identifier, where the second URL includes target information used to display the payment page.

In practice, different scenario types can correspond to different second URLs. For example, a second URL of a POS-based NFC payment scenario can be different from a second URL of a vending cabinet NFC payment scenario. Therefore, the URL query identifier used to query the second URL is related to a scenario type. Different payment scenarios can correspond to different URL query identifiers, and different URL query identifiers can identify different second URLs, to further display different payment pages for the user based on the different second URLs. For example, there can be different URL query identifiers in different scenarios such as POS payment and vending cabinet payment.

In one or more embodiments of this specification, the data already stored by the payment terminal device can include a mapping relationship between a URL query identifier and a URL template. After acquiring the first URL, the payment terminal device can identify, based on the URL query identifier in the first URL and a locally stored mapping relationship between a URL query identifier and a URL template, a URL template corresponding to the URL query identifier. Subsequently, a to-be-filled position of the URL template is then filled with the information identifier included in the first URL, to obtain a second URL. Since a process of determining the second URL is described in detail in subsequent embodiments of embodiments of this specification. Details are omitted here for simplicity.

Step 206: Display the payment page based on the second URL.

In one or more embodiments of this specification, the target information that is used to display the payment page and that is included in the second URL can be information needed for rendering the payment page, such as text information, image information, and amount information. After determining the second URL, the payment terminal device can directly render the payment page based on the target information that is used to display the payment page and that is included in the second URL.

In one or more embodiments of this specification, the first URL transmitted by the NFC tag device to the payment terminal device in the near field communication way includes the URL query identifier, and the payment terminal device can determine, based on the URL query identifier and the already stored data, the second URL that needs to be used for displaying the payment page, to obtain, through local query, the second URL corresponding to the first URL, so that time consumed during opening of the payment page in the NFC payment process is further reduced, thereby effectively improving an App calling speed, and further helping improve user experience and NFC payment efficiency.

In the method in FIG. 2, since the length of the first URL acquired by the payment terminal device from the NFC tag device based on the near field communication way is not greater than the maximum number of bytes that can be transmitted by the NFC tag device based on the near field communication way at a time, a case that is caused by a URL being excessively long and in which the NFC tag device needs to perform a plurality of sub-packet transmissions with the payment terminal device is avoided, thereby improving transmission efficiency of information transmission between the NFC tag device and the payment terminal device and effectively reducing information transmission time. In addition, the first URL transmitted by the NFC tag device to the payment terminal device in the near field communication way includes the URL query identifier, and the payment terminal device can determine, based on the URL query identifier and the already stored data, the second URL that needs to be used for displaying the payment page, to obtain, through local query, the second URL corresponding to the first URL, and further open the payment page based on the second URL, where network access does not need to be performed in a process of opening the payment page, so that time consumed during opening of the payment page in the NFC payment process is further reduced, thereby effectively improving an App calling speed, and further helping improve user experience and NFC payment efficiency.

Based on the method in FIG. 2, one or more embodiments of this specification further provide some specific implementation solutions of the method, as described below.

In practice, after acquiring the first URL, the payment terminal device can start a main process of a corresponding application program based on protocol header information in the first URL, where the main process of the application program can analyze service parameter information after a protocol header in the first URL to obtain a new URL, and extract, from the new URL, identification information needed for determining the second URL.

Based on this, before the determining, based on data already stored by the payment terminal device, a second URL corresponding to the URL query identifier in step 204, the method in FIG. 2 can further include the following steps: analyzing the service parameter information in the first URL, to obtain a third URL, where the service parameter information includes the URL query identifier and an information identifier, and the information identifier is used to query service description information corresponding to the first URL; and extracting the URL query identifier and the information identifier from the third URL.

In one or more embodiments of this specification, the service parameter information in the first URL can refer to information following a specified character (for example, scheme) of a parameter in a link. For example, the first URL is https://render.alipay.com/p/s/ulink/?s=nfc&scheme=
alipay %1A2B3c4d%1A2B3c4dCCC%5e6F${token}_${amount}, where https://render.alipay.com/p/s/ulink/? s=nfc is the protocol header, the payment terminal device can determine, based on information in the protocol header, that this URL is a URL that applies for Alipay to perform NFC payment, to further start a main process of Alipay, and after being started, the main process of Alipay can analyze a part of the service parameter information, to be specific, alipay%1A2B3¢c4d%1A2B3c4dCCC%5e6F${token}_${amount} after the specified character scheme, to obtain the third URL after the analysis, to be specific, alipay://nfc/app?s=CCC&v=${token_${amount}, where CCC can represent the URL query identifier, ${token} can represent the information identifier, and ${amount} can represent the amount information. It is worthwhile to note that CCC, ${token}, and ${amount} can represent locations of these identifiers or information in the URL, and in practice, CCC, token, and amount can be specific strings, for example, a specific third URL is alipay://nfc/app?s=sn&v=1q2w3e4r5t6y7u8i_0.01, where the URL query identifier is specifically sn, the information identifier is specifically 1q2w3e4r5t6y7u8i, and the amount information is specifically 0.01.

As described above, after the third URL is obtained, the URL query identifier and the information identifier can be extracted based on a compositional structure of the third URL by using a predetermined URL processing process.

In practice, the service description information corresponding to the first URL can be information related to one order, and the service description information can include, but is not limited to, an order number, a merchant number, order placement time, generation time of the first URL, an order payment time limit, a payment user identifier, and an order payment result. The service description information can be stored on an application server side. The application server side can randomly generate information identifiers and store one information identifier in association with service description information of one order. In this case, there is a mapping relationship between a first URL including the information identifier and the order stored in association with the information identifier. In this way, after the information identifier is acquired, the service description information of the corresponding order can be queried from the application server side based on the information identifier.

In one or more embodiments of this specification, after the URL query identifier is extracted from the third URL, a corresponding URL template needed for generating the second URL can be further determined based on the URL query identifier.

Based on this, the determining, based on data already stored by the payment terminal device, a second URL corresponding to the URL query identifier in step 204 in the method in FIG. 2 can specifically include: querying a URL template based on the URL query identifier, where the URL template includes a to-be-filled position; and filling the to-be-filled position with the information identifier, to obtain the second URL, where the second URL includes the target information, and the information identifier is included in the target information.

In one or more embodiments of this specification, the data already stored by the payment terminal device can include a mapping relationship between a URL query identifier and a URL template. Therefore, the URL template corresponding to the URL query identifier can be identified based on the mapping relationship. The to-be-filled position in the URL template is then filled with the information identifier extracted from the third URL, to obtain the second URL including the target information used to display the payment page.

In practice, if the first URL acquired by the payment terminal device further includes amount information, the to-be-filled position in the URL template can be filled with the information identifier and the amount information, to obtain a second URL including the amount information. Certainly, if the first URL does not include amount information, the to-be-filled position in the URL template is filled with only the information identifier, to obtain the second URL. For example, an example in which the third URL is alipay://nfc/app?s=sn&v=1q2w3e4r5t6y7u8i_0.01 is still used, where the URL query identifier is sn, the information identifier is 1q2w3e4r5t6y7u8i, the amount of information is 0.01, a URL template corresponding to the query identifier sn is alipays://platformapi/startApp?appId=112233&appScheme=NFC_ABC&pageParams=%12345q wert$[value]$%6789, and $[value]$ represents the to-be-filled position. After filling the to-be-filled position in the URL template with the information identifier 1q2w3e4r5t6y7u8i and the amount information 0.01, a second URL alipays://platformapi/startApp?appId=112233&appScheme=NFC_ABC&pageParams=%12345q wertlq2w3e4r5t6y7u8i_0.01%6789 can be obtained.

In one or more embodiments of this specification, the target information included in the second URL can include a component identifier, a task identifier, and a task parameter.

Correspondingly, the displaying the payment page based on the second URL in step 206 in the method in FIG. 2 can specifically include: determining a first application component corresponding to the component identifier; determining a page rendering task corresponding to the task identifier; and executing the page rendering task based on the task parameter by using the first application component, to render the payment page.

In one or more embodiments of this specification, different component identifiers can correspond to different application components, different task identifiers can correspond to different page rendering tasks, and different task parameters can be used to render different pages. The following uses an example to specifically describe the component identifier, the task identifier, and the task parameter that are included in the second URL, and an example in which the second URL is alipays://platformapi/startApp?appId=112233& appScheme=NFC_ABC&pageParams=%12345qwert1q2w3edr5toy7u8i 0.01%6789 is used, where 112233 is a specific component identifier, NFC_ABC is a specific task identifier, and %12345qwertlq2w3e4r5t6y7u8i_0.01%6789 is a specific task parameter. It can be seen that the information identifier (1q2w3e4r5t6y7u8i) is included in the task parameter.

In one or more embodiments of this specification, the first application component is a component of an application program of the payment terminal device for rendering the payment page based on the second URL. Specifically, the first application component can be an activity component. In practice, a page corresponding to the activity component can be set to be visible to the user, so that during operation of the first application component, the application program can render the payment page corresponding to the second URL, and display the payment page to the user.

In one or more embodiments of this specification, to executing the page rendering task based on the task parameter by using the first application component, to render the payment page can specifically mean that rendering the payment page in a native way. Since there is no need to load a container for rendering the payment page in the native way, page rendering efficiency can be improved, thereby helping reduce time consumed during page rendering.

In practice, when a predetermined condition is satisfied, for example, when a native payment page is unavailable due to a fatal problem, or when a new capability needs to be urgently released, the payment page can alternatively be rendered in a container way, to ensure, to the greatest extent when the payment page cannot be rendered in the native way, that the user can smoothly open the payment page.

In one or more embodiments of this specification, the payment page is a landing page of an App calling operation, or in other words, displaying the payment page means that App calling succeeds, and a first page that can be seen by the user after NFC code scanning payment is initiated is the payment page.

Executing the page rendering task based on the task parameter by using the first application component, to render the payment page can specifically include: acquiring pre-stored page information based on the task parameter, where the page information includes at least one of picture information and copywriting information; and executing the page rendering task based on the page information by using the first application component, to render the payment page.

In one or more embodiments of this specification, the pre-stored page information acquired based on the task parameter can determine information included in the rendered payment page. If the pre-stored page information acquired based on the task parameter includes the picture information and the copywriting information, the payment page rendered based on the page information can include both the picture information and the copywriting information.

In practice, the picture information in the page information can include, but is not limited to, a scenario picture of NFC payment, a guidance picture of an NFC payment operation process, and a picture of an NFC payment discount activity. The copywriting information in the page information can include, but is not limited to, "Tap to pay, come and experience it", "Keep close to pay", and "NFC payment, one step faster".

In one or more embodiments of this specification, the task parameter included in the second URL can further include amount information, the amount information can include first amount information or second amount information, the first amount information represents a set amount value, and the second amount information represents no amount value is provided; and the set amount value is displayed in the payment page when the amount information is the first amount information; or the amount value is not displayed in the payment page when the amount information is the second amount information.

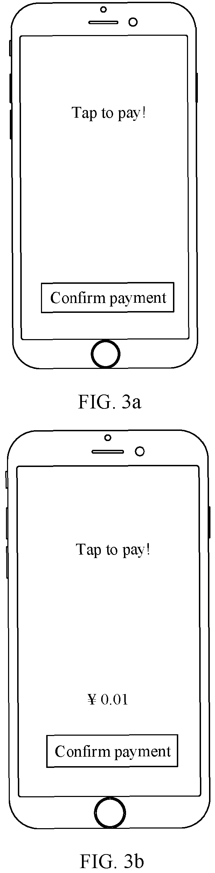

In one or more embodiments of this specification, if the first URL acquired by the payment terminal device of the user does not include the amount information, the amount information in the task parameter included in the second URL corresponds to the second amount information, and the amount value is not displayed in the payment page ultimately displayed for the user. FIG. 3a is a schematic diagram illustrating a payment page, according to one or more embodiments of this specification. As shown in FIG. 3a, an amount value is not displayed in the payment page.

In one or more embodiments of this specification, if the first URL acquired by the payment terminal device of the user includes the amount information, the amount information in the task parameter included in the second URL corresponds to the first amount information, and the amount value is displayed in the payment page ultimately displayed for the user. FIG. 3b is a schematic diagram illustrating another payment page, according to one or more embodiments of this specification. As shown in FIG. 3b, an amount value 0.01 yuan to be paid by the user is displayed in the payment page.

In practice, after the payment terminal device of the user displays the payment page for the user, the user can indicate, by clicking on a payment control in the payment page, that the user agrees to perform the payment. After obtaining consent of the user, the payment terminal device can send, to the application server, a service request used to perform payment processing on the order so that the application server can perform subsequent payment processing based on information included in the service request.

Based on this, the payment page can further include the payment control.

Correspondingly, after the displaying the payment page based on the second URL in step 206, the method in FIG. 2 can further include: sending the service request to the application server based on the second URL in response to a trigger operation of the user on the payment control, where the service request includes an information identifier, and the information identifier is used to query service description information corresponding to the first URL; receiving service execution result information returned by the application server, where the service execution result information is determined by the application server based on the service description information, and the service description information is obtained through query by the application server based on the information identifier; and displaying a payment result page based on the service execution result information.

In one or more embodiments of this specification, the payment control in the payment page can specifically include a payment confirmation control. In practice, the payment control can further specifically include a payment cancellation control. The payment page can include both the payment confirmation control and the payment cancellation control for the user to select from, or can include a payment control "Confirm Payment" but does not include the payment cancellation control, as shown in FIG. 3b. A setting for the payment control can be flexibly provided and adjusted based on actual needs.

In practice, an application program for NFC payment processing at the payment terminal device further needs to be started before displaying the payment page for the user, and start of the application program is classified into cold start and hot start, where the two start ways correspond to different App calling processes.

Based on this, the displaying the payment page based on the second URL in step 206 in the method in FIG. 2 can specifically include: directly displaying the payment page during cold start of an application program.

In one or more embodiments of this specification, the cold start of the application program refers to a process in which the application program is started when the application program is not run or after a process is terminated. In this process, a system needs to create a process and initialize an application, which usually needs longer time than the hot start (where the application is still running in a memory). During the cold start, the system needs to load all resources and data, including an execution file of the application, a data file, and a system resource that can be needed, of the application from scratch.

In an existing technology, during App calling using the cold start, the application program at the payment terminal device additionally loads other processes, such as a push process, a tools process, and a small program process, than a main process. These processes other than the main process are non-essential processes in an NFC payment App calling process and running these processes reduces efficiency of the App calling and increases time consumed during the App calling. In addition, during the App calling using the cold start, a plurality of pages need to be loaded, such as an App calling undertaking page, a transit page, an intermediate scanning page, a splash screen page, a home page of the application program, and the payment page, where only the App calling undertaking page and the payment page are necessary pages, and loading other redundant pages inevitably increases the time consumed during the App calling.

In one or more embodiments of this specification, the directly displaying the payment page during cold start of an application program means that during the cold start of the application program, non-essential pages, such as a home page of the application program, a splash screen page, a transit page, and an intermediate scanning page, of the NFC payment process, are not loaded, and other processes than the main process are not loaded, but the main process is directly loaded and displays the payment page. In this way, time consumed during loading of a non-essential process is saved, and time consumed during loading of some non-essential pages before the payment page is loaded is further saved, thereby effectively reducing time consumed during opening of the payment page in the NFC payment process, and improving the efficiency of the App calling.

For the case of the hot start, before the displaying the payment page based on the second URL in step 206, the method in FIG. 2 can further include: performing stack clearing on a page stack during hot start of an application program.

In one or more embodiments of this specification, the hot start of the application program means that the user opens the application program again when the application program is opened on the user terminal but is placed in the background for a certain cause (for example, the user presses a return key, a home key, etc.). During the hot start, since a process of the application program already exists in the background of the user terminal, the system does not need to create an application class, but directly restores a state of the application from an existing process and creates and initializes a main activity class. Therefore, a hot start process is faster and user experience is better.

In an Android operating system, when the user starts a plurality of pages in an application program, each of the pages can serve as a page stack. The page (Activity) stack is a mechanism designed by an Android framework to manage a life cycle of an activity. The term "stack" here does not refer to a stack data structure of a programming language, but refers to a logical concept used to track an activity (that is, each page in an application) in life cycle management of the application. Each time new activity is started, the started new activity is added to the top of an activity stack, that is, "pushed into the stack". When the user navigates back to a previous page, activity of a current page is removed from the top of the stack, that is, "pulled from the stack".

In the activity stack, each activity has status information of the activity, including a view state, a life cycle state, and other related data of the activity, and the information can be stored and restored through a life cycle management mechanism of the system. A "stack clearing" operation refers to removing some or all activities from the activity stack. In practice, the stack clearing operation can be achieved through startActivityForResult, Flags of Intent, or a way inside a component.

In one or more embodiments of this specification, performing stack clearing on the page stack can remove pages, of the application program, that already exist in the background, for example, removing a home page, a splash screen page, and a scanning page, of the application program that already exists. Therefore, a case in which an irrelevant page is presented to the user and then the irrelevant page is redirected to the payment page in the NFC payment process can be avoided. After stack clearing is performed on the page stack, the payment page can be directly presented to the user in an App calling process, which is conducive to improving user experience.

In practice, near field communication is established between the payment terminal device of the user and the NFC tag device, and the payment terminal device of the user can be used as a primary NFC device that transmits a near field communication signal.

Based on this, the acquiring a first URL from an NFC tag device based on the near field communication way in step 202 in the method in FIG. 2 can specifically include: transmitting a near field communication signal by using the payment terminal device as a primary NFC device; and acquiring the first URL sent by the NFC tag device in the near field communication way in response to the near field communication signal.

In practice, the first URL acquired by the payment terminal device based on NFC can further include domain name information, where the domain name information can be used to indicate an application program, at the payment terminal device, to be used for this time of NFC payment.

Based on this, the acquiring a first URL from an NFC tag device based on the near field communication way in step 202 in the method in FIG. 2 can specifically include: acquiring, by an operating system, the first URL provided by the NFC tag device in the near field communication way, where the first URL further includes the domain name information; determining the application program corresponding to the domain name information; and transmitting the first URL to the application program.

In one or more embodiments of this specification, after the payment terminal device acquires the first URL sent by the NFC tag device based on NFC, the operating system can first identify protocol type information of the first URL to determine whether to respond to the first URL, and further identify the domain name information in the first URL to determine, based on the domain name information, the application program that needs to be called. After determining the application program that needs to be called, the operating system can transmit the first URL to the application program so that a main process of the application program can determine a second URL based on the first URL and further render the payment page based on the second URL.

In practice, the first URL can further include path information, where the path information can be used to indicate an application component, of the application program, that needs to be used for this time of NFC payment.

Correspondingly, the determining an application program corresponding to the domain name information can specifically include: determining a second application component corresponding to the domain name information and the path information.

Correspondingly, the transmitting the first URL to the application program can specifically include: transmitting the first URL to the second application component.

In one or more embodiments of this specification, after obtaining the first URL, the operating system can identify the domain name information and the path information in the first URL, and determine, based on the domain name information and the path information, an application component used to process the first URL. The application component can be an application component that is pre-registered in the operating system and that corresponds to the domain name information and the path information.

In one or more embodiments of this specification, the second application component can be a component, in the application program, used to convert the first URL. Specifically, the second application component can be an activity component. In practice, a page corresponding to the second application component can be set to be invisible. During operation of the second application component, the application program can convert the first URL to the second URL.

In one or more embodiments of this specification, the second application component corresponding to the domain name information and the path information can run in the main process of the application program. During the cold start, the second application component used to process the first URL can be created and the main process, of the application program, used to run the second application component can be created; and during the hot start, the second application component used to process the first URL can likewise be created and the second application component can be enabled to run in the main process of the application program.

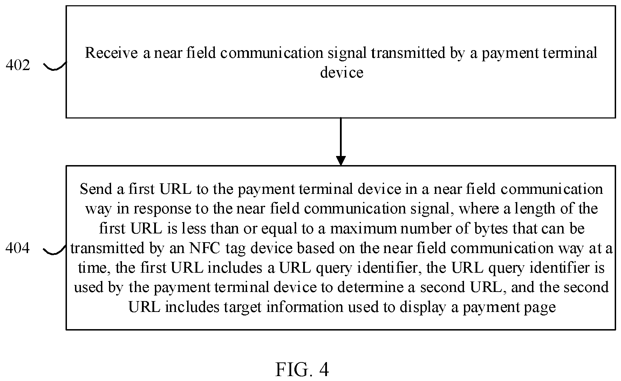

FIG. 4 is a schematic flowchart illustrating an NFC-based information sending method, according to one or more embodiments of this specification. From a hardware perspective, the process can be performed by an NFC tag device. From a program perspective, the process can be performed by an application program installed in the NFC tag device. As shown in FIG. 4, the process can include the following steps.

Step 402: Receive a near field communication signal transmitted by a payment terminal device.

Step 404: Send a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

In one or more embodiments of this specification, the NFC tag device, the payment terminal device, the near field communication, the first URL, the URL query identifier, the second URL, the payment page, and the target information of the payment page can have the same meanings as those of the words referred to in the embodiment of the method in FIG. 2. Since the above-mentioned already describes in detail the process in which the NFC tag device sends the first URL to the payment terminal device in the near field communication way, details are omitted here.

In one or more embodiments of this specification, the payment terminal device is used as an NFC card reader. The payment terminal device, when put close to the NFC tag device, can transmit the near field communication signal to the NFC tag device, to trigger near field communication with the NFC tag device, and further obtain the first URL from the NFC tag device.

In the method in FIG. 4, since the length of the first URL acquired by the payment terminal device from the NFC tag device based on the near field communication way is not greater than the maximum number of bytes that can be transmitted by the NFC tag device based on the near field communication way at a time, a case that is caused by a URL being excessively long and in which the NFC tag device needs to perform a plurality of sub-packet transmissions with the payment terminal device is avoided, thereby improving transmission efficiency of information transmission between the NFC tag device and the payment terminal device and effectively reducing information transmission time. In addition, the first URL transmitted by the NFC tag device to the payment terminal device in the near field communication way includes the URL query identifier, and the payment terminal device can determine, based on the URL query identifier and the already stored data, the second URL that needs to be used for displaying the payment page, to obtain, through local query, the second URL corresponding to the first URL, so that time consumed during opening of the payment page in the NFC payment process is further reduced, thereby effectively improving an App calling speed, and further helping improve user experience and NFC payment efficiency.

Based on the method in FIG. 4, one or more embodiments of this specification further provide some specific implementation solutions of the method, as described below.

In one or more embodiments of this specification, before the receiving a near field communication signal transmitted by a payment terminal device in step 402, the method in FIG. 4 can further include: acquiring a predetermined trigger operation; acquiring first service information in response to the trigger operation; sending a URL acquisition request to an application server, where the URL acquisition request includes the first service information; and receiving the first URL returned by the application server, where the first URL includes an information identifier, the information identifier is used to query service description information, the service description information includes the first service information and second service information, and the second service information includes information that is acquired by the application server and that is related to a service corresponding to the first URL.

In one or more embodiments of this specification, the predetermined trigger operation can include, but is not limited to, operations such as a cashier clicking a payment collection button on a cash register device, and a user clicking a payment button on a vending cabinet. The first service information can include, but is not limited to, information such as an order number, a merchant number, order placement time, and an order amount. The second service information can include, but is not limited to, information such as generation time of the first URL, sending time of the first URL, content of the first URL, a payment time limit of the order, whether the order is paid, and an identifier of a payment user.

In practice, the first service information can include order-related information sent by the NFC tag device to the application server. Some information in the second service information can include information sent by the payment terminal device to the application server, for example, identification information of the payment user. Some information in the second service information can further include information generated by the application server, for example, the generation time of the first URL and a time limit of an information identifier.

In one or more embodiments of this specification, the application server can obtain the information identifier (token) in a way of generating a random code and store the information identifier in association with the service description information. Therefore, when receiving a service request that includes the information identifier and that is sent by the payment terminal device, the application server can query corresponding service description information based on the information identifier, to further advance a service process.

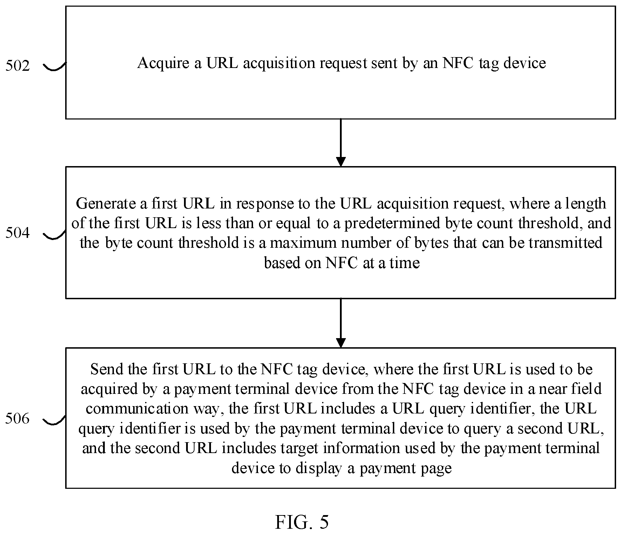

FIG. 5 is a schematic flowchart illustrating a URL sending method, according to one or more embodiments of this specification. From a hardware perspective, the process can be performed by an application server. From a program perspective, the process can be performed by an application program installed in the application server. As shown in FIG. 5, the process can include the following steps.

Step 502: Acquire a URL acquisition request sent by an NFC tag device.

Step 504: Generate a first URL in response to the URL acquisition request, where a length of the first URL is less than or equal to a predetermined byte count threshold, and the byte count threshold is a maximum number of bytes that can be transmitted based on NFC at a time.

Step 506: Send the first URL to the NFC tag device, where the first URL is used to be acquired by a payment terminal device from the NFC tag device in a near field communication way, the first URL includes a URL query identifier, the URL query identifier is used by the payment terminal device to query a second URL, and the second URL includes target information used by the payment terminal device to display a payment page.

In one or more embodiments of this specification, the NFC tag device, the payment terminal device, the near field communication, the first URL, the URL query identifier, the second URL, the payment page, and the target information of the payment page can have the same meanings as those of the words referred to in the embodiment of the method in FIG. 2. Since the above-mentioned already describes in detail the process in which the NFC tag device sends the first URL to the payment terminal device in the near field communication way, details are omitted here.

In one or more embodiments of this specification, the first URL is generated by the application server in response to the URL acquisition request sent by the NFC tag device, and the URL acquisition request can include information about a service scenario type of the NFC tag device.

Based on this, the generating a first URL in response to the URL acquisition request in step 504 in the method in FIG. 5 can specifically include: determining the service scenario type of the NFC tag device in response to the URL acquisition request; and generating a first URL corresponding to the service scenario type, where the URL query identifier included in the first URL is used to query a second URL corresponding to the service scenario type.

In one or more embodiments of this specification, the service scenario type of the NFC tag device can include, but is not limited to, a POS payment scenario, a vending cabinet payment scenario, a service machine water sales service scenario, a gate opening scenario, and a food ordering scenario. In practice, different service scenarios can correspond to different URL query identifiers, and different URL query identifiers can identify different second URLs, so that different payment pages are displayed for a user based on the different second URLs. Since the above-mentioned content already describes in detail the process in which the second URL corresponding to the service scenario type is determined based on the URL query identifier included in the first URL, details are omitted herein.

Optionally, the generating a first URL in response to the URL acquisition request in step 504 in the method in FIG. 5 can specifically include: generating an information identifier based on first service information included in the URL acquisition request, where the information identifier is used to query service description information corresponding to the first URL, the service description information includes the first service information and second service information, and the second service information includes information that is acquired by the application server and that is related to a service corresponding to the first URL; and generating a first URL that includes the information identifier.

In one or more embodiments of this specification, the information identifier can be generated by the application server based on the first service information, for example, the application server generates the information identifier based on an order number or a merchant number. In addition, optionally, the information identifier can alternatively be a string randomly generated by the application server. In the application server, the generated information identifier and the service description information can be stored in correspondence and association so that the service description information can be queried based on the information identifier when the service description information needs to be used subsequently.

Correspondingly, after the sending the first URL to the NFC tag device in step 506, the method in FIG. 5 can further include: acquiring a service request sent by the payment terminal device, where the service request includes the information identifier; querying, based on the information identifier, service description information used to execute a service corresponding to the service request; executing the service based on identified service description information, to obtain service execution result information; and sending the service execution result information to the payment terminal device.

Specifically, an example in which a service is a payment service for a certain order is used for description. When a payment terminal device of a user displays a payment page for the user, the user can trigger a payment confirmation control in the payment page if approving the order. When the user triggers the payment confirmation control in the payment page, the payment terminal device can send a service request to the application server to request the application server to execute a service for the order.

After receiving the service request sent by the payment terminal device, the application server can identify, based on an information identifier included in the service request, service description information stored in association with the information identifier. Since the service description information can include related information of the order, the application server can execute a payment service for the order based on the identified service description information to obtain a corresponding payment result, and feed back payment result information to the payment terminal device.

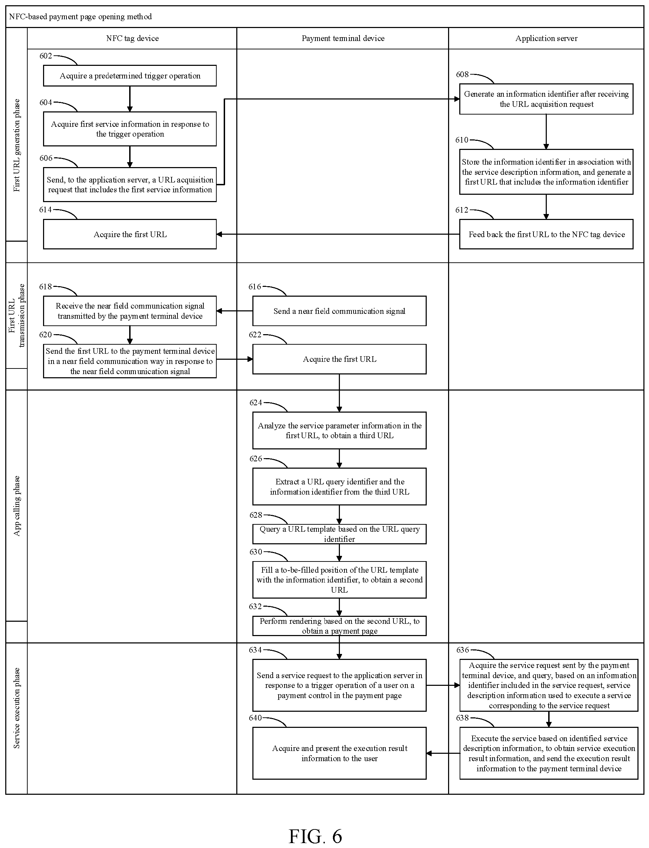

FIG. 6 is a swimlane diagram illustrating the NFC-based payment page opening method corresponding to FIG. 2, according to one or more embodiments of this specification. As shown in FIG. 6, a process of the NFC-based payment page opening method can associate with execution bodies such as an NFC tag device, a payment terminal device, and an application server, and the process of the method can include a first URL generation phase, a first URL transmission phase, an App calling phase, and a service execution phase, and can specifically include the following steps.

Step 602: The NFC tag device acquires a predetermined trigger operation.

Step 604: The NFC tag device acquires first service information in response to the trigger operation.

Step 606: The NFC tag device sends, to the application server, a URL acquisition request that includes the first service information.

Step 608: The application server generates an information identifier after receiving the URL acquisition request.

Step 610: The application server stores the information identifier in association with the service description information, and generates a first URL that includes the information identifier.

Step 612: The application server feeds back the first URL to the NFC tag device.

Step 614: The NFC tag device acquires the first URL.

Step 616: The payment terminal device transmits a near field communication signal.

Step 618: The NFC tag device receives the near field communication signal transmitted by the payment terminal device.

Step 620: The NFC tag device sends the first URL to the payment terminal device in a near field communication way in response to the near field communication signal.

Step 622: The payment terminal device acquires the first URL.

Step 624: The payment terminal device analyzes the service parameter information in the first URL, to obtain a third URL.

Step 626: The payment terminal device extracts a URL query identifier and the information identifier from the third URL.

Step 628: The payment terminal device queries a URL template based on the URL query identifier.

Step 630: The payment terminal device fills a to-be-filled position of the URL template with the information identifier, to obtain a second URL.

Step 632: The payment terminal device performs rendering based on the second URL, to obtain a payment page.

Step 634: The payment terminal device sends a service request to the application server in response to a trigger operation of a user on a payment control in the payment page.

Step 636: The application server acquires the service request sent by the payment terminal device, and queries, based on an information identifier included in the service request, service description information used to execute a service corresponding to the service request.

Step 638: The application server executes the service based on identified service description information, to obtain service execution result information, and sends the service execution result information to the payment terminal device.

Step 640: The payment terminal device acquires and presents the service execution result information to the user.

Step 602 to step 614 are the first URL generation phase, and information interaction between the NFC tag device and the application server can be included in the first URL generation phase. Step 616 to step 622 are the first URL transmission phase, and information interaction between the NFC tag device and the payment terminal device can be included in the first URL transmission phase. Step 624 to step 632 are the App calling phase, and the App calling phase can be performed at the payment terminal device. Step 634 to step 640 are the service execution phase, and information interaction between the payment terminal device and the application server can be included in the service execution phase.

Based on the same idea, one or more embodiments of this specification further provide an apparatus corresponding to the above-mentioned method.

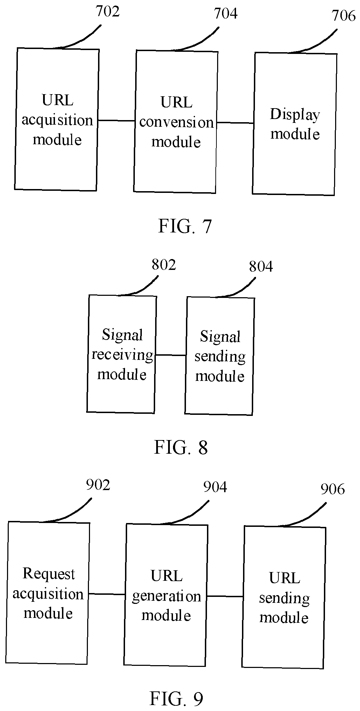

FIG. 7 is a schematic diagram illustrating a structure of an NFC-based payment page opening apparatus corresponding to FIG. 2, according to one or more embodiments of this specification. The apparatus can be used in a payment terminal device and include: a URL acquisition module 702, configured to acquire a first URL from an NFC tag device based on a near field communication way, where a length of the first URL is less than or equal to a maximum number of bytes that can be transmitted by the NFC tag device based on the near field communication way at a time, and the first URL includes a URL query identifier. a URL conversion module 704, configured to determine, based on data already stored by the payment terminal device, a second URL corresponding to the URL query identifier, where the second URL includes target information used to display a payment page; and a display module 706, configured to display the payment page based on the second URL.

Based on the apparatus in FIG. 7, one or more embodiments of this specification further provide some specific implementations of the apparatus, as described below.

Optionally, the apparatus can further include: an analysis module, configured to analyze the service parameter information in the first URL, to obtain a third URL, where the service parameter information includes the URL query identifier and an information identifier, and the information identifier is used to query service description information corresponding to the first URL; and an extraction module, configured to extract the URL query identifier and the information identifier from the third URL.

Optionally, the URL conversion module 704 can specifically include: a URL template query unit, configured to query a URL template based on the URL query identifier, where the URL template includes a to-be-filled position; and a second URL acquisition unit, configured to fill the to-be-filled position with the information identifier, to obtain the second URL, where the second URL includes the target information, and the information identifier is included in the target information.

Optionally, the target information can include a component identifier, a task identifier, and a task parameter.

Correspondingly, the display module 706 can specifically include: a first determining unit, configured to determine a first application component corresponding to the component identifier; a second determining unit, configured to determine a page rendering task corresponding to the task identifier; and a rendering unit, configured to execute the page rendering task based on the task parameter by using the first application component, to render the payment page.

Optionally, the rendering unit can specifically include: a page information acquisition subunit, configured to acquire pre-stored page information based on the task parameter, where the page information includes at least one of picture information and copywriting information; and a rendering subunit, configured to execute the page rendering task based on the page information by using the first application component, to render the payment page.

Optionally, in the apparatus, the task parameter can further include amount information, the amount information includes first amount information or second amount information, the first amount information can represent a set amount value, and the second amount information can represent that no amount value is provided; and the set amount value is displayed in the payment page when the amount information is the first amount information; or the amount value is not displayed in the payment page when the amount information is the second amount information.

Optionally, the payment page can include a payment control.

Correspondingly, the apparatus can further include: a service request sending module, configured to send a service request to an application server based on the second URL in response to a trigger operation of a user on the payment control, where the service request includes an information identifier, and the information identifier is used to query service description information corresponding to the first URL; a service execution result information receiving module, configured to receive service execution result information returned by the application server, where the service execution result information is determined by the application server based on the service description information, and the service description information is obtained through query by the application server based on the information identifier; and a payment result page display module, configured to display a payment result page based on the service execution result information.

Optionally, the display module 706 can specifically include: a display unit, configured to directly display the payment page during cold start of an application program.

Optionally, the apparatus can further include: a stack clearing module, configured to perform stack clearing on a page stack during hot start of an application program.

Optionally, the URL acquisition module 702 can specifically include: a signal transmission unit, configured to transmit a near field communication signal by using the payment terminal device as a primary NFC device; and a first URL acquisition unit, configured to acquire the first URL sent by the NFC tag device in the near field communication way in response to the near field communication signal.

Optionally, the URL acquisition module 702 can specifically include: a first URL acquisition unit, configured to acquire the first URL provided by the NFC tag device in the near field communication way, where the first URL further includes domain name information; an application program determining unit, configured to determine an application program corresponding to the domain name information; and a first URL transmission unit, configured to transmit the first URL to the application program.

Optionally, the first URL can further include path information.

Correspondingly, the application program determining unit can specifically include: an application program determining subunit, configured to determine a second application component corresponding to the domain name information and the path information.

Correspondingly, the first URL transmission unit can specifically include: a first URL transmission subunit, configured to transmit the first URL to the second application component.

FIG. 8 is a schematic diagram illustrating a structure of an NFC-based information sending apparatus corresponding to FIG. 4, according to one or more embodiments of this specification. The apparatus can be used in an NFC tag device and include: a signal receiving module 802, configured to receive a near field communication signal transmitted by a payment terminal device; and a signal sending module 804, configured to send a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

Optionally, the apparatus can further include: a first acquisition module, configured to acquire a predetermined trigger operation; a second acquisition module, configured to acquire first service information in response to the trigger operation; a URL acquisition request sending module, configured to send a URL acquisition request to an application server, where the URL acquisition request includes the first service information; and a first URL receiving module, configured to receive the first URL returned by the application server, where the first URL includes an information identifier, the information identifier is used to query service description information, the service description information includes the first service information and second service information, and the second service information includes information that is acquired by the application server and that is related to a service corresponding to the first URL.

FIG. 9 is a schematic diagram illustrating a structure of a URL sending apparatus corresponding to FIG. 5, according to one or more embodiments of this specification. The apparatus can be used in an application server and include: a request acquisition module 902, configured to acquire a URL acquisition request sent by an NFC tag device; a URL generation module 904, configured to generate a first URL in response to the URL acquisition request, where a length of the first URL is less than or equal to a predetermined byte count threshold, and the byte count threshold is a maximum number of bytes that can be transmitted based on NFC at a time; and a URL sending module 906, configured to send the first URL to the NFC tag device, where the first URL is used to be acquired by a payment terminal device the NFC tag device in a near field communication way, the first URL includes a URL query identifier, the URL query identifier is used by the payment terminal device query a second URL, and the second URL includes target information used by the payment terminal device to display a payment page.

Optionally, the URL generation module 904 can specifically include: a service scenario type determining unit, configured to determine a service scenario type of the NFC tag device in response to the URL acquisition request; and a first URL generation unit, configured to generate a first URL corresponding to the service scenario type, where the URL query identifier included in the first URL is used to query a second URL corresponding to the service scenario type.

Optionally, the URL generation module 904 can specifically include: an information identifier generation unit, configured to generate an information identifier based on first service information included in the URL acquisition request, where the information identifier is used to query service description information corresponding to the first URL, the service description information includes the first service information and second service information, and the second service information includes information that is acquired by the application server and that is related to a service corresponding to the first URL; and a first URL generation unit, configured to generate a first URL that includes the information identifier.

Optionally, the apparatus can further include: a service request acquisition module, configured to acquire a service request sent by the payment terminal device, where the service request includes the information identifier; a service description information query module, configured to query, based on the information identifier, service description information used to execute a service corresponding to the service request; a service execution result information acquisition module, configured to execute the service based on identified service description information, to obtain service execution result information; and an execution result information sending module, configured to send the service execution result information to the payment terminal device.

Based on the same idea, one or more embodiments of this specification further provide a device corresponding to the above-mentioned method.

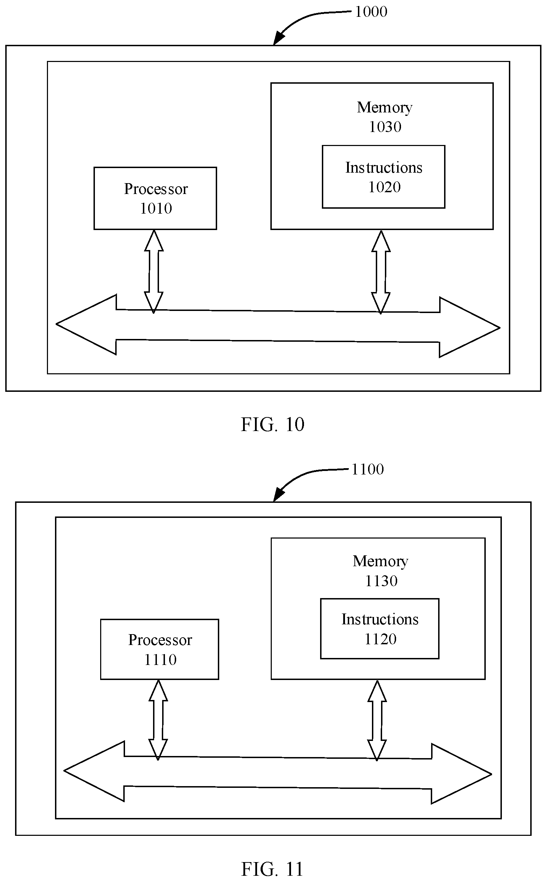

FIG. 10 is a schematic diagram illustrating a structure of a payment terminal device corresponding to FIG. 2, according to one or more embodiments of this specification. As shown in FIG. 10, a device 1000 can be the payment terminal device, and the device 1000 can include: at least one processor 1010; and a memory 1030 communicatively connected to the at least one processor, where the memory 1030 stores instructions 1020 that can be executed by the at least one processor 1010, and the instructions are executed by the at least one processor 1010, so that the at least one processor 1010 can: acquire a first URL from an NFC tag device based on a near field communication way, where a length of the first URL is less than or equal to a maximum number of bytes that can be transmitted by the NFC tag device based on the near field communication way at a time, and the first URL includes a URL query identifier; determine, based on data already stored by the payment terminal device, a second URL corresponding to the URL query identifier, where the second URL includes target information used to display a payment page; and display the payment page based on the second URL.

FIG. 11 is a schematic diagram illustrating a structure of an NFC tag device corresponding to FIG. 4, according to one or more embodiments of this specification. As shown in FIG. 11, a device 1100 can be the NFC tag device, and the device 1100 can include: at least one processor 1110; and a memory 1130 communicatively connected to the at least one processor, where the memory 1130 stores instructions 1120 that can be executed by the at least one processor 1110, and the instructions are executed by the at least one processor 1110, so that the at least one processor 1110 can: receive a near field communication signal transmitted by a payment terminal device; and send a first URL to the payment terminal device in a near field communication way in response to the near field communication signal, where a length of the first URL is less than or equal to a maximum number of bytes that can be transmitted by the NFC tag device based on the near field communication way at a time, the first URL includes a URL query identifier, the URL query identifier is used by the payment terminal device to determine a second URL, and the second URL includes target information used to display a payment page.

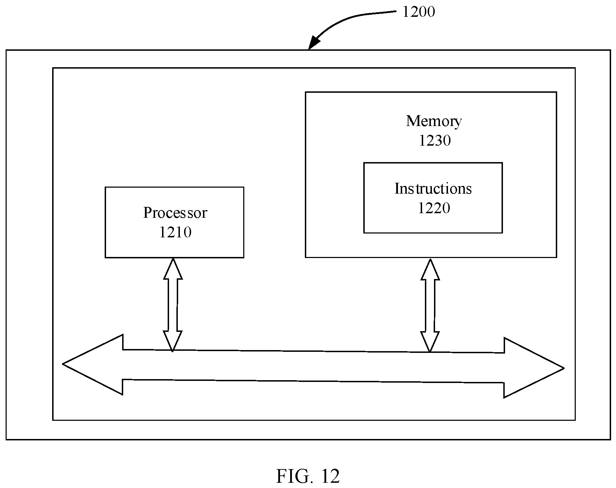

FIG. 12 is a schematic diagram illustrating a structure of an application server corresponding to FIG. 5, according to one or more embodiments of this specification. As shown in FIG. 12, a device 1200 can be the application server, and the device 1200 can include: at least one processor 1210; and a memory 1230 communicatively connected to the at least one processor, where the memory 1230 stores instructions 1220 that can be executed by the at least one processor 1210, and the instructions are executed by the at least one processor 1210, so that the at least one processor 1210 can: acquire a URL acquisition request sent by an NFC tag device; generate a first URL in response to the URL acquisition request, where a length of the first URL is less than or equal to a predetermined byte count threshold, and the byte count threshold is a maximum number of bytes that can be transmitted based on NFC at a time; and send the first URL to the NFC tag device, where the first URL is used to be acquired by a payment terminal device from the NFC tag device in a near field communication way, the first URL includes a URL query identifier, the URL query identifier is used by the payment terminal device to query a second URL, and the second URL includes target information used by the payment terminal device to display a payment page.

The embodiments of this specification are described in a progressive way. For same or similar parts in the embodiments, reference may be made to each other. Each embodiment focuses on a difference from another embodiment. Particularly, the embodiments of the devices shown in FIG. 10 to FIG. 12 are basically similar to the method embodiments, and therefore are described briefly. For related parts, references can be made to related descriptions in the method embodiments.

Specific embodiments of this specification are described above. Other embodiments fall within the scope of the appended claims. In some cases, the actions or steps described in the claims can be performed in an order different from those in the embodiments, and the desired results can still be achieved. In addition, processes described in the accompanying drawings do not necessarily need a specific order or a sequential order shown to achieve the desired results. In some implementations, multi-tasking and concurrent processing are feasible or may be advantageous.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit to obtain a corresponding hardware circuit structure. Therefore, a method procedure can be improved using a hardware entity module. For example, a programmable logic device (PLD) (for example, a field programmable gate array (FPGA)) is such an integrated circuit, and a logical function of the programmable logic device is determined by a user through device programming. The designer independently performs programming to "integrate" a digital system to a PLD without requesting a chip manufacturer to design and manufacture an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-highspeed integrated circuit hardware description language (VHDL) and Verilog are most commonly used. A person skilled in the art should also understand that a hardware circuit that implements a logical method procedure can be readily obtained once the method procedure is logically programmed by using the some described hardware description languages and is programmed into an integrated circuit.

A controller can be implemented by using any appropriate method. For example, the controller can be a microprocessor or a processor, or a computer-readable medium that stores computer readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicon Labs C8051F320. The memory controller can also be implemented as a part of the control logic of the memory. A person skilled in the art also knows that, in addition to implementing the controller by using the computer-readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The system, apparatus, module, or unit illustrated in the above-mentioned embodiments can be implemented by using a computer chip or an entity, or can be implemented by using a product having a specific function. A typical implementation device is a computer. Specifically, for example, the computer can be a personal computer, a laptop computer, a cellular phone, a camera phone, a smart phone, a personal digital assistant, a media player, a navigation device, an e-mail device, a game console, a tablet computer, a wearable device, or any combination of these devices.

For ease of description, the above-mentioned apparatus is described by dividing functions into various units. Certainly, during implementation of this specification, functions of units can be implemented in the same or more software or hardware.

A person skilled in the art should understand that one or more embodiments of this application can be provided as a method, a system, or a computer program product. Therefore, this application can use a form of hardware only embodiments, software only embodiments, or embodiments with a combination of software and hardware. Further, this application can use a form of a computer program product implemented on one or more computer-usable storage media (including but not limited to a magnetic disk memory, a CD-ROM, and an optical memory) containing computer-usable program code.

This application is described with reference to the flowcharts and/or block diagrams of the method, the device (system), and the computer program product according to one or more embodiments of this application. It should be understood that each process and/or each block in the flowcharts and/or the block diagrams and a combination of a process and/or a block in the flowcharts and/or block diagrams can be implemented by using computer program instructions. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable memory that can instruct the computer or the another programmable data processing device to work in a specific way, so the instructions stored in the computer-readable memory generate an artifact that includes an instruction apparatus. The instruction apparatus implements a specific function in one or more processes in the flowcharts and/or in one or more blocks in the block diagrams.

These computer program instructions can alternatively be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPUs), an input/output interface, a network interface, and a memory.

The memory may include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes a persistent and non-persistent, removable and non-removable medium, and can implement information storage by using any method or technology. Information can be a computer-readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ... " does not preclude the presence of additional identical elements in the process, method, product, or device that includes the element.

This specification can be described in a general context of a computer-executable instruction executed by a computer, for example, a program module. Generally, the program module includes a routine, a program, an object, a component, a data structure, etc. executing a specific task or implementing a specific abstract data type. This specification can also be practiced in a distributed computing environment in which tasks are performed by remote processing devices connected via a communication network. In a distributed computing environment, the program module can be located in both local and remote computer storage media including storage devices.

The above-mentioned descriptions are merely embodiments of this specification, and are not intended to limit this specification. A person skilled in the art can make various modifications and variations to this specification. Any modification, equivalent replacement, or improvement made without departing from the spirit and principle of this application shall fall within the scope of the claims of this specification.

### Examples

1. An NFC-based payment page opening method, applied to a payment terminal device and comprising:
   acquiring a first URL from an NFC tag device based on a near field communication way, wherein a length of the first URL is less than or equal to a maximum number of bytes that can be transmitted by the NFC tag device based on the near field communication way at a time, and the first URL comprises a URL query identifier;
   determining, based on data already stored by the payment terminal device, a second URL corresponding to the URL query identifier, wherein the second URL comprises target information used to display a payment page; and
   displaying the payment page based on the second URL.
2. The method according to example 1, wherein before the determining, based on data already stored by the payment terminal device, a second URL corresponding to the URL query identifier, the method further comprises:
   analyzing service parameter information in the first URL, to obtain a third URL, wherein the service parameter information comprises the URL query identifier and an information identifier, and the information identifier is used to query service description information corresponding to the first URL; and
   extracting the URL query identifier and the information identifier from the third URL.
3. The method according to example 2, wherein the determining, based on data already stored by the payment terminal device, a second URL corresponding to the URL query identifier specifically comprises:
   querying a URL template based on the URL query identifier, wherein the URL template comprises a to-be-filled position; and
   filling the to-be-filled position with the information identifier, to obtain the second URL, wherein the second URL comprises the target information, and the information identifier is comprised in the target information.
4. The method according to example 1, wherein the target information comprises a component identifier, a task identifier, and a task parameter; and
   the displaying the payment page based on the second URL specifically comprises:
   determining a first application component corresponding to the component identifier;
   determining a page rendering task corresponding to the task identifier; and
   executing the page rendering task based on the task parameter by using the first application component, to render the payment page.
5. The method according to example 4, wherein the executing the page rendering task based on the task parameter by using the first application component, to render the payment page specifically comprises:
   acquiring pre-stored page information based on the task parameter, wherein the page information comprises at least one of picture information and copywriting information; and
   executing the page rendering task based on the page information by using the first application component, to render the payment page.
6. The method according to example 4, wherein the task parameter further comprises amount information, the amount information comprises first amount information or second amount information, the first amount information represents a set amount value, and the second amount information represents that no amount value is provided; and
   the set amount value is displayed in the payment page when the amount information is the first amount information; or
   the amount value is not displayed in the payment page when the amount information is the second amount information.
7. The method according to example 1, wherein the payment page comprises a payment control; and after the displaying the payment page based on the second URL, the method further comprises:
   sending a service request to an application server based on the second URL in response to a trigger operation of a user on the payment control, wherein the service request comprises an information identifier, and the information identifier is used to query service description information corresponding to the first URL;
   receiving service execution result information returned by the application server, wherein the service execution result information is determined by the application server based on the service description information, and the service description information is obtained through query by the application server based on the information identifier; and
   displaying a payment result page based on the service execution result information.
8. The method according to example 1, wherein the displaying the payment page based on the second URL specifically comprises:
   directly displaying the payment page during cold start of an application program.
9. The method according to example 1, wherein before the displaying the payment page based on the second URL, the method further comprises:
   performing stack clearing on a page stack during hot start of an application program.
10. The method according to example 1, wherein the acquiring a first URL from an NFC tag device based on a near field communication way specifically comprises:
   transmitting a near field communication signal by using the payment terminal device as a primary NFC device; and
   acquiring the first URL sent by the NFC tag device in the near field communication way in response to the near field communication signal.
11. The method according to example 1, wherein the acquiring a first URL from an NFC tag device based on a near field communication way specifically comprises:
   acquiring, by an operating system, the first URL provided by the NFC tag device in the near field communication way, wherein the first URL further comprises domain name information;
   determining an application program corresponding to the domain name information; and
   transmitting the first URL to the application program.
12. The method according to example 11, wherein the first URL further comprises path information; and the determining an application program corresponding to the domain name information specifically comprises:
   determining a second application component that correspond to the domain name information and the path information; and
   the transmitting the first URL to the application program specifically comprises:
      transmitting the first URL to the second application component.
13. An NFC-based information sending method, applied to an NFC tag device and comprising:
   receiving a near field communication signal transmitted by a payment terminal device; and
   sending a first URL to the payment terminal device in a near field communication way in response to the near field communication signal, wherein a length of the first URL is less than or equal to a maximum number of bytes that can be transmitted by the NFC tag device based on the near field communication way at a time, the first URL comprises a URL query identifier, the URL query identifier is used by the payment terminal device to determine a second URL, and the second URL comprises target information used to display a payment page.
14. The method according to example 13, wherein before the receiving a near field communication signal transmitted by a payment terminal device, the method further comprises:
   acquiring a predetermined trigger operation;
   acquiring first service information in response to the trigger operation;
   sending a URL acquisition request to an application server, wherein the URL acquisition request comprises the first service information; and
   receiving the first URL returned by the application server, wherein the first URL comprises an information identifier, the information identifier is used to query service description information, the service description information comprises the first service information and second service information, and the second service information comprises information that is acquired by the application server and that is related to a service corresponding to the first URL.
15. A URL sending method, applied to an application server and comprising:
   acquiring a URL acquisition request sent by an NFC tag device;
   generating a first URL in response to the URL acquisition request, wherein a length of the first URL is less than or equal to a predetermined byte count threshold, and the byte count threshold is a maximum number of bytes that can be transmitted based on NFC at a time; and
   sending the first URL to the NFC tag device, wherein the first URL is used to be acquired by a payment terminal device from the NFC tag device in a near field communication way, the first URL comprises a URL query identifier, the URL query identifier is used by the payment terminal device to query a second URL, and the second URL comprises target information used by the payment terminal device to display a payment page.
16. The method according to example 15, wherein the generating a first URL in response to the URL acquisition request specifically comprises:
   determining a service scenario type of the NFC tag device in response to the URL acquisition request; and
   generating a first URL corresponding to the service scenario type, wherein the URL query identifier comprised in the first URL is used to query a second URL corresponding to the service scenario type.
17. The method according to example 15, wherein the generating a first URL in response to the URL acquisition request specifically comprises:
   generating an information identifier based on first service information comprised in the URL acquisition request, wherein the information identifier is used to query service description information corresponding to the first URL, the service description information comprises the first service information and second service information, and the second service information comprises information that is acquired by the application server and that is related to a service corresponding to the first URL; and
   generating a first URL that comprises the information identifier.
18. The method according to example 17, wherein after the sending the first URL to the NFC tag device, the method further comprises:
   acquiring a service request sent by the payment terminal device, wherein the service request comprises the information identifier;
   querying, based on the information identifier, service description information used to execute a service corresponding to the service request;
   executing the service based on identified service description information, to obtain service execution result information; and
   sending the service execution result information to the payment terminal device.
19. An NFC-based payment page opening apparatus, used in a payment terminal device and comprising:
   a URL acquisition module, configured to acquire a first URL from an NFC tag device based on a near field communication way, wherein a length of the first URL is less than or equal to a maximum number of bytes that can be transmitted by the NFC tag device based on the near field communication way at a time, and the first URL comprises a URL query identifier;
   a URL conversion module, configured to determine, based on data already stored by the payment terminal device, a second URL corresponding to the URL query identifier, wherein the second URL comprises target information used to display a payment page; and
   a display module, configured to display the payment page based on the second URL.
20. An NFC-based information sending apparatus, used in an NFC tag device and comprising:
   a signal receiving module, configured to receive a near field communication signal transmitted by a payment terminal device; and
   a signal sending module, configured to send a first URL to the payment terminal device in a near field communication way in response to the near field communication signal, wherein a length of the first URL is less than or equal to a maximum number of bytes that can be transmitted by the NFC tag device based on the near field communication way at a time, the first URL comprises a URL query identifier, the URL query identifier is used by the payment terminal device to determine a second URL, and the second URL comprises target information used to display a payment page.
21. A URL-sending apparatus, used in an application server and comprising:
   a request acquisition module, configured to acquire a URL acquisition request sent by an NFC tag device;
   a URL generation module, configured to generate a first URL in response to the URL acquisition request, wherein a length of the first URL is less than or equal to a predetermined byte count threshold, and the byte count threshold is a maximum number of bytes that can be transmitted based on NFC at a time; and
   a URL sending module, configured to send the first URL to the NFC tag device, wherein the first URL is used to be acquired by a payment terminal device the NFC tag device in a near field communication way, the first URL comprises a URL query identifier, the URL query identifier is used by the payment terminal device query a second URL, and the second URL comprises target information used by the payment terminal device to display a payment page.
22. A payment terminal device, comprising:
   at least one processor; and
   a memory communicatively connected to the at least one processor, wherein
   the memory stores instructions that can be executed by the at least one processor, and the instructions are executed by the at least one processor so that the at least one processor can:
      acquire a first URL from an NFC tag device based on a near field communication way, wherein a length of the first URL is less than or equal to a maximum number of bytes that can be transmitted by the NFC tag device based on the near field communication way at a time, and the first URL comprises a URL query identifier;
      determine, based on data already stored by the payment terminal device, a second URL corresponding to the URL query identifier, wherein the second URL comprises target information used to display a payment page; and
      display the payment page based on the second URL.
23. An NFC tag device, comprising:
   at least one processor; and
   a memory communicatively connected to the at least one processor, wherein
   the memory stores instructions that can be executed by the at least one processor, and the instructions are executed by the at least one processor so that the at least one processor can:
      receive a near field communication signal transmitted by a payment terminal device; and
      send a first URL to the payment terminal device in a near field communication way in response to the near field communication signal, wherein a length of the first URL is less than or equal to a maximum number of bytes that can be transmitted by the NFC tag device based on the near field communication way at a time, the first URL comprises a URL query identifier, the URL query identifier is used by the payment terminal device to determine a second URL, and the second URL comprises target information used to display a payment page.
24. An application server, comprising:
   at least one processor; and
   a memory communicatively connected to the at least one processor, wherein
   the memory stores instructions that can be executed by the at least one processor, and the instructions are executed by the at least one processor so that the at least one processor can:
      acquire a URL acquisition request sent by an NFC tag device;
      generate a first URL in response to the URL acquisition request, wherein a length of the first URL is less than or equal to a predetermined byte count threshold, and the byte count threshold is a maximum number of bytes that can be transmitted based on NFC at a time; and
      send the first URL to the NFC tag device, wherein the first URL is used to be acquired by a payment terminal device from the NFC tag device in a near field communication way, the first URL comprises a URL query identifier, the URL query identifier is used by the payment terminal device to query a second URL, and the second URL comprises target information used by the payment terminal device to display a payment page.

## Claims

1. A method for near field communication, NFC, -based payment page opening, the methodperformed by a payment terminal device and comprising:
acquiring (202) a first uniform resource locator, URL, from an NFC tag device based on a near field communication way, wherein a length of the first URL is less than or equal to a maximum number of bytes that can be transmitted by the NFC tag device based on the near field communication way at a time, and the first URL comprises a URL query identifier;
determining (204), based on data already stored by the payment terminal device, a second URL corresponding to the URL query identifier, wherein the second URL comprises target information used to display a payment page; and
displaying (206) the payment page based on the second URL.

2. The method according to claim 1, wherein, before determining (204), based on data already stored by the payment terminal device, a second URL corresponding to the URL query identifier, the method further comprises:
analyzing service parameter information in the first URL, to obtain a third URL, wherein the service parameter information comprises the URL query identifier and an information identifier, and the information identifier is used to query service description information corresponding to the first URL; and
extracting the URL query identifier and the information identifier from the third URL; optionally
wherein determining (204), based on data already stored by the payment terminal device, a second URL corresponding to the URL query identifier comprises:
querying a URL template based on the URL query identifier, wherein the URL template comprises a to-be-filled position; and
filling the to-be-filled position with the information identifier, to obtain the second URL, wherein the second URL comprises the target information, and the information identifier is comprised in the target information.

3. The method according to any one of claims 1 or 2, wherein the target information comprises a component identifier, a task identifier, and a task parameter; and
displaying (206) the payment page based on the second URL comprises:
determining a first application component corresponding to the component identifier;
determining a page rendering task corresponding to the task identifier; and
executing the page rendering task based on the task parameter by using the first application component, to render the payment page.

4. The method according to claim 3, wherein executing the page rendering task based on the task parameter by using the first application component, to render the payment page comprises:
acquiring pre-stored page information based on the task parameter, wherein the page information comprises at least one of picture information and copywriting information; and
executing the page rendering task based on the page information by using the first application component, to render the payment page; and/or
wherein the task parameter further comprises amount information, the amount information comprises first amount information or second amount information, the first amount information represents a set amount value, and the second amount information represents that no amount value is provided; and
the set amount value is displayed in the payment page when the amount information is the first amount information; or
the amount value is not displayed in the payment page when the amount information is the second amount information.

5. The method according to any one of claims 1 to 4, wherein the payment page comprises a payment control; and after the displaying the payment page based on the second URL, the method further comprises:
sending a service request to an application server based on the second URL in response to a trigger operation of a user on the payment control, wherein the service request comprises an information identifier, and the information identifier is used to query service description information corresponding to the first URL;
receiving service execution result information returned by the application server, wherein the service execution result information is determined by the application server based on the service description information, and the service description information is obtained through query by the application server based on the information identifier; and
displaying a payment result page based on the service execution result information.

6. The method according to any one of claims 1 to 5, wherein displaying (206) the payment page based on the second URL comprises:
directly displaying the payment page during cold start of an application program; or
wherein, before displaying (206) the payment page based on the second URL, the method further comprises:
performing stack clearing on a page stack during hot start of an application program.

7. The method according to any one of claims 1 to 6, wherein acquiring (202) a first URL from an NFC tag device based on a near field communication way comprises:
transmitting a near field communication signal by using the payment terminal device as a primary NFC device; and
acquiring the first URL sent by the NFC tag device in the near field communication way in response to the near field communication signal; or
wherein acquiring (202) a first URL from an NFC tag device based on a near field communication way comprises:
acquiring, by an operating system, the first URL provided by the NFC tag device in the near field communication way, wherein the first URL further comprises domain name information;
determining an application program corresponding to the domain name information; and
transmitting the first URL to the application program; optionally
wherein the first URL further comprises path information; and the determining an application program corresponding to the domain name information comprises:
determining a second application component that correspond to the domain name information and the path information; and
the transmitting the first URL to the application program comprises:
transmitting the first URL to the second application component.

8. A method for near field communication, NFC, -based information sending, the methodperformed by an NFC tag device and comprising:
receiving (402) a near field communication signal transmitted by a payment terminal device; and
sending (404) a first uniform resource locator, URL, to the payment terminal device in a near field communication way in response to the near field communication signal, wherein a length of the first URL is less than or equal to a maximum number of bytes that can be transmitted by the NFC tag device based on the near field communication way at a time, the first URL comprises a URL query identifier, the URL query identifier is used by the payment terminal device to determine a second URL, and the second URL comprises target information used to display a payment page.

9. The method according to claim 8, wherein, before receiving (402) a near field communication signal transmitted by a payment terminal device, the method further comprises:
acquiring a predetermined trigger operation;
acquiring first service information in response to the trigger operation;
sending a URL acquisition request to an application server, wherein the URL acquisition request comprises the first service information; and
receiving the first URL returned by the application server, wherein the first URL comprises an information identifier, the information identifier is used to query service description information, the service description information comprises the first service information and second service information, and the second service information comprises information that is acquired by the application server and that is related to a service corresponding to the first URL.

10. A method for uniform resource locator, URL, sending, the method performed by an application server and comprising:
acquiring (502) a URL acquisition request sent by a near field communication, NFC, tag device;
generating (504) a first URL in response to the URL acquisition request, wherein a length of the first URL is less than or equal to a predetermined byte count threshold, and the byte count threshold is a maximum number of bytes that can be transmitted based on NFC at a time; and
sending (506) the first URL to the NFC tag device, wherein the first URL is used to be acquired by a payment terminal device from the NFC tag device in a near field communication way, the first URL comprises a URL query identifier, the URL query identifier is used by the payment terminal device to query a second URL, and the second URL comprises target information used by the payment terminal device to display a payment page.

11. The method according to claim 10, wherein generating (504) a first URL in response to the URL acquisition request comprises:
determining a service scenario type of the NFC tag device in response to the URL acquisition request; and
generating a first URL corresponding to the service scenario type, wherein the URL query identifier comprised in the first URL is used to query a second URL corresponding to the service scenario type.

12. The method according to claim 10, wherein generating (504) a first URL in response to the URL acquisition request comprises:
generating an information identifier based on first service information comprised in the URL acquisition request, wherein the information identifier is used to query service description information corresponding to the first URL, the service description information comprises the first service information and second service information, and the second service information comprises information that is acquired by the application server and that is related to a service corresponding to the first URL; and
generating a first URL that comprises the information identifier; optionally
wherein after sending (506) the first URL to the NFC tag device, the method further comprises:
acquiring a service request sent by the payment terminal device, wherein the service request comprises the information identifier;
querying, based on the information identifier, service description information used to execute a service corresponding to the service request;
executing the service based on identified service description information, to obtain service execution result information; and
sending the service execution result information to the payment terminal device.

13. A payment terminal device, comprising:
at least one processor; and
a memory communicatively connected to the at least one processor, wherein
the memory stores instructions that can be executed by the at least one processor, and the instructions are executed by the at least one processor so that the at least one processor performs the metho of any one of claims 1 to 8.

14. A near field communication, NFC, tag device, comprising:
at least one processor; and
a memory communicatively connected to the at least one processor, wherein
the memory stores instructions that can be executed by the at least one processor, and the instructions are executed by the at least one processor so that the at least one processor performs the method of any one of claims 8 or 9.

15. An application server, comprising:
at least one processor; and
a memory communicatively connected to the at least one processor, wherein
the memory stores instructions that can be executed by the at least one processor, and the instructions are executed by the at least one processor so that the at least one processor performs the methof of any one of claims 10 to 12.
